# EUROPÄISCHE PATENTANMELDUNG

(11) **EP 4 184 734 A1**
(43) Veröffentlichungstag der Anmeldung: **24.05.2023**
(21) Anmeldenummer: 21209090.6
(22) Anmeldetag: 18.11.2021
(51) Int. Cl.: H02G 3/12, E04B 2/00, H02G 3/38, E03D 11/14, E03D 5/10

(54) **SANITÄRE EINBAUANORDNUNG**

(71) Anmelder: Geberit International AG, 8645 Jona (CH)
(72) Erfinder: RAISSLE, Daniel, 8852 Altendorf (CH); OBERHOLZER, Roland, 8610 Uster (CH); SALZMANN, Stefan, 8640 Rapperswil (CH); HARTMANN, Andy, 8712 Stäfa (CH); PORTMANN, Florian, 8708 Männedorf (CH)
(74) Vertreter: Frischknecht, Harry Ralph

(57) **Zusammenfassung**

Eine sanitäre Einbauanordnung (1) umfasst
ein mit einer Tragstruktur verbindbares Montagegestell (2),
eine mit dem Montagegestell (2) in Verbindung stehende Montagetraverse (3),
ein an der Montagetraverse (3) befestigtes Gehäuse (4) mit einer Seitenwand (5), die einen Gehäuseinnenraum (6) seitlich begrenzt, und mit einer Frontöffnung (7), über welche Zugang zum Gehäuseinnenraum (6) geschaffen werden kann,
mindestens ein mit dem Gehäuse (4) in Verbindung stehendes Kabelschachtelement (8) mit einem Kabelschacht (9), welches Kabelschachtelement (8) an einer Aussenfläche (10) der Seitenwand (5) am Gehäuse (4) angebracht ist und sich von einer Aussenfläche (10) der Seitenwand (5) von der Seitenwand (5) weg erstreckt,
und
eine mit dem Montaggestell (2) verbindbare Vorwand (10) mit einem Ausschnitt (11), wobei der Ausschnitt (11) derart angeordnet ist, dass Zugang zur Frontöffnung (7) geschaffen wird und dass das mindestens eine Kabelschachtelement (8) ausserhalb des Ausschnittes (11) liegt und durch die Vorwand (10) verdeckt liegt.

## Beschreibung

### TECHNISCHES GEBIET

Die vorliegende Erfindung betrifft eine sanitäre Einbauanordnung nach Anspruch 1.

### STAND DER TECHNIK

Aus dem Stand der Technik sind sanitäre Einbauanordnungen bekannt geworden. Solche Einbauanordnungen umfassen typischerweise ein Montagegestell, welches durch eine Vorwand überdeckt ist. Das Montagegestell umfasst Aufnahmestrukturen zur Aufnahme von Sanitärartikeln, wie beispielsweise Toilettenschüsseln und/oder Waschtische vor der Vorwand und Spülkästen und/oder Wasserversorgungselement hinter der Vorwand.

### DARSTELLUNG DER ERFINDUNG

Ausgehend von diesem Stand der Technik liegt der Erfindung eine Aufgabe zugrunde, eine sanitäre Einbauanordnung anzugeben, welche für die Aufnahme von elektrischen Komponenten ausgebildet und für eine gute Zugänglichkeit sowie für einen vereinfachten Kabelanschluss ausgebildet ist.

Diese Aufgabe löst der Gegenstand von Anspruch 1. Demgemäss umfasst eine sanitäre Einbauanordnung ein mit einer Tragstruktur verbindbares Montagegestell, eine mit dem Montagegestell in Verbindung stehende Montagetraverse und ein an der Montagetraverse befestigtes Gehäuse mit einer Seitenwand, die einen Gehäuseinnenraum seitlich begrenzt und mit einer Frontöffnung, über welche Zugang zum Gehäuseinnenraum geschaffen werden kann. Weiter umfasst die Einbauanordnung mindestens ein mit dem Gehäuse in Verbindung stehendes Kabelschachtelement mit einem Kabelschacht, welches Kabelschachtelement an einer Aussenfläche der Seitenwand am Gehäuse angebracht ist und sich von einer Aussenfläche der Seitenwand von der Seitenwand weg erstreckt, und eine mit dem Montaggestell verbindbare Vorwand mit einem Ausschnitt, wobei der Ausschnitt derart angeordnet ist, dass Zugang zur Frontöffnung geschaffen wird und dass das mindestens eine Kabelschachtelement ausserhalb des Ausschnittes liegt und durch die Vorwand verdeckt liegt.

Diese Ausbildung hat den Vorteil, dass der Gehäuseinnenraum durch den Ausschnitt gut zugänglich ist, während gleichzeitig der Kabelanschluss mit dem Kabelschachtelement vereinfacht wird. Durch die Überdeckung des Kabelschachtelements ergeht weiter der Vorteil, dass bei Wartungsarbeiten nur der Innenraum zugänglich ist und die Kabel von unbefugter oder unbeabsichtigter Manipulation verdeckt sind. Ferner wird zusätzlicher Raum für die Aufnahme von Kabel geschaffen, wodurch die Kabel sicher und ohne Knicke verstaut werden können.

In Einbaulage von vorne gesehen bildet die Vorwand das vorderste Elemente und alle anderen Elemente der Einbauanordnung liegen hinter der Vorwand.

Die Vorwand wird vorzugsweise durch eine Gipsplatte oder eine Gipsplatte, welche mit Fliesen beschichtet ist, bereitgestellt.

Das Kabelschachtelement ist vorzugsweise separat zum Gehäuse ausgebildet und kann mit dem Gehäuse verbunden werden. Das Gehäuse wie auch das mindestens eine Kabelschachtelement sind vorzugsweise aus Kunststoff.

Vorzugsweise umfasst das Montagegestell weiter Befestigungsstrukturen, über welche mindestens ein Sanitärartikel mit dem Montagegestell verbindbar ist. Die Befestigungsstrukturen sind beispielsweise Gewindeöffnungen. Ein Sanitärartikel ist vorzugsweise eine Klosettschüssel, ein Urinal, ein Waschtisch, ein Spülkasten, Wasserversorgungselemente, wie Rohre und Ventile, Wasserentsorgungselemente, wie Rohre und Siphons, etc.

Vorzugsweise ist der Ausschnitt derart angeordnet, dass ausschliesslich der Gehäuseinnenraum zugänglich ist und dass das Montagegestell, die Montagetraverse sowie das mindestens eine Kabelschachtelement durch die Vorwand überdeckt sind. Hierdurch wird sichergestellt, dass bei einer Wartung ausschliesslich der Gehäuseinnenraum zugänglich ist, was Fehlmanipulation vermeidet.

Vorzugsweise entspricht die lichte Weite des Ausschnitts der lichten Weite der Frontöffnung. Die lichte Weite ist die Ausdehnung des Ausschnitts bzw. der Frontöffnung rechtwinklig auf die Vorwand gesehen.

Vorzugsweise sind zwei der besagten Kabelschachtelemente an jeweils zwei unterschiedlichen Seitenwänden angeordnet, wobei die Seitenwände, an denen ein Kabelschachtelement angeordnet ist, bezüglich des Gehäuseinnenraums vorzugsweise diametral gegenüberliegen.

Somit können Kabel von zwei unterschiedlichen Seiten in den Gehäuseinnenraum geführt werden, was die Flexibilität des Einbaus erhöht.

Vorzugsweise ist in Einbaulage eines der Kabelschachtelemente oberseitig zum Gehäuse und das andere der Kabelschachtelemente unterseitig zum Gehäuse angeordnet. Es ist aber auch denkbar, dass die Kabelschachtelemente in Einbaulage links und rechts zum Gehäuse liegen. Ferner ist denkbar, dass nur ein Kabelschachtelement angeordnet wird.

Beide der genannten Kabelschachtelemente liegen ebenfalls hinter der Vorwand und sind durch diese abdeckt.

Vorzugsweise ist das mindestens eine Kabelschachtelement über eine Befestigungsschnittstelle mit der Seitenwand verbindbar, wobei die Seitenwand einen Durchbruch aufweist, über welchen Kabel vom Kabelschacht in den Gehäuseinnenraum führbar sind.

Vorzugsweise wird die Befestigungsschnittstelle durch eine Aufnahmenut an der Seitenwand und durch eine in die Aufnahmenut eingreifende Haltelasche, die am Kabelschachtelement angeformt ist und durch eine am Kabelschachtelement angeformte Rastlasche, die am Durchbruch eingreift, bereitgestellt.

Vorzugsweise weist das Kabelschachtelement mindestens eine Aufnahmeöffnung auf, durch welche ein Wellrohr mit einem Kabel oder ein Kabel in den Kabelschacht des Kabelschachtelements führbar ist.

Vorzugsweise weist das Gehäuse einen Gehäuseboden auf, welcher gegenüber der Frontöffnung angeordnet ist, wobei vorzugsweise das Gehäuse mit dem Gehäuseboden auf der Montagetraverse aufliegt.

Vorzugsweise liegt der Gehäuseboden auf einer Montagefläche auf der Montagetraverse auf.

Vorzugsweise ist im Gehäuseinnenraum ein elektrisches Schnittstellenelement mit einem Kabelklemmbereich mit mindestens einer Kabelklemme und einen Steckerbereich mit mindestens einem schnittstellenelementseitigen Steckverbinder angeordnet, wobei die mindestens eine Kabelklemme mit dem mindestens einen schnittstellenelementseitigen Steckverbinder elektrisch leitend in Verbindung steht.

Vorzugsweise sind die Kabel, welche durch den Kabelschacht in den Gehäuseinnenraum geführt werden, mit der mindestens einen Kabelklemme verbindbar.

Vorzugsweise umfasst die Einbauanordnung weiterhin ein Steuerungsgerät, wobei der mindestens eine schnittstellenelementseitige Steckverbinder zur Aufnahme eines steuerungsgerätseitigen Steckverbinders des Steuerungsgerätes ausgebildet ist, wobei der schnittstellenelementseitigen Steckverbinder mit dem steuerungsgerätseitigen Steckverbinder über eine Steckbewegung verbindbar sind.

Vorzugsweise weist das Steuerungsgerät eine Dimension auf, welche kleiner als die lichte Weite des Ausschnittes und der Frontöffnung ist, so dass das Steuerungsgerät in eine Richtung, die rechtwinklig zur Frontseite der Vorwand verläuft, in den Gehäuseinnenraum eingesetzt werden kann.

Vorzugsweise ist die Steckbewegung eine Längsbewegung, welche rechtwinklig zur Frontfläche der Vorwand orientiert ist. Hierdurch kann das Steuerungsgerät sehr einfach in den Gehäuseinnenraum eingesetzt werden.

Vorzugsweise umfasst die Einbauanordnung weiterhin einen Deckel, mit welchem der Ausschnitt verschliessbar ist.

Der Deckel weist vorzugsweise eine Oberflächenstruktur auf, welche der Oberflächenstruktur der Vorwand entspricht.

Vorzugsweise umfasst das Montagegestell zwei beabstandet zueinander liegende Vertikalstützen, wobei die Montagetraverse sich von der einen Vertikalstütze zur anderen Vertikalstütze erstreckt.

Vorzugsweise umfasst die Einbauanordnung weiterhin ein Rahmenelement, welches auf die Seitenwände des Gehäuses aufsetzbar ist, wobei das Rahmenelement eine Rahmenöffnung aufweist, dessen lichte Weite der lichten Weite des Gehäuseinnenraums entspricht.

Das Rahmenelement dient als Verlängerungselement des Gehäuseinnenraums, so dass die Vorwand an das Rahmenelement herangeführt werden kann. Ferner wirkt das Rahmenelement als Bauschutz, so dass bei der Befliesung kein Mörtel oder ähnliches in den Gehäuseinnenraum hineinfliessen kann.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht der Einbauanordnung nach einer Ausführungsform der vorliegenden Erfindung ohne Vorwand;
- Fig. 2: eine weitere perspektivische Einbauanordnung der Figur 2 mit einem Rahmenelement;
- Fig. 3: eine Frontansicht der Einbauanordnung nach den vorhergehenden Figuren mit einem Teil einer Vorwand;
- Fig. 4: eine Detailansicht der Figur 3;
- Fig. 5: eine Schnittansicht der Einbauanordnung nach den vorhergehenden Figuren; und
- Fig. 6: eine weitere Frontansicht der Einbauanordnung nach den vorhergehenden Figuren.

### BESCHREIBUNG BEVORZUGTER AUSFÜHRUNGSFORMEN

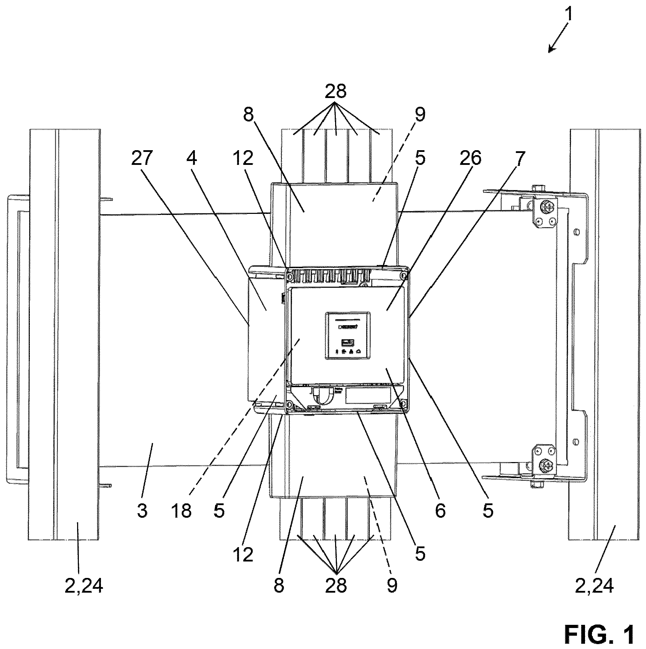

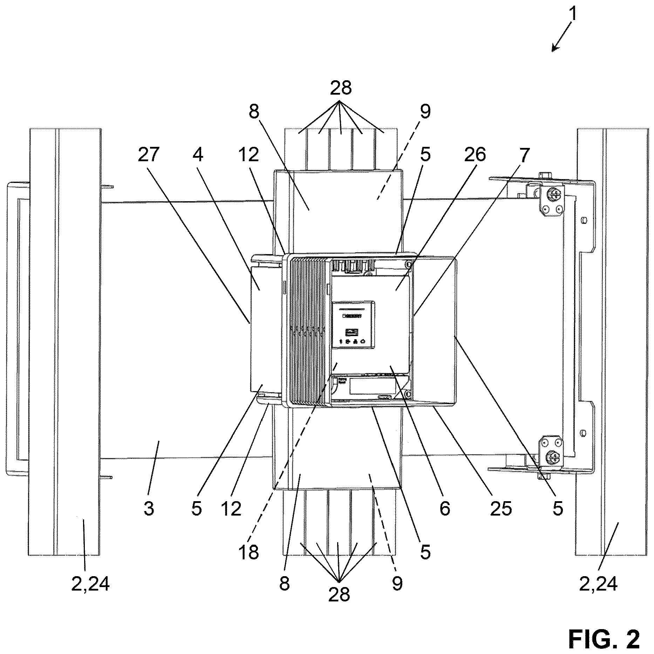

In den Figuren wird eine sanitäre Einbauanordnung 1 gezeigt. Die sanitäre Einbauanordnung 1 umfasst ein Montagegestell 2, eine mit dem Montagegestell 2 in Verbindung stehende Montagetraverse 3, ein an der Montagetraverse 3 befestigtes Gehäuse 4, mindestens ein mit dem Gehäuse 4 in Verbindung stehendes Kabelschachtelement 8 und eine mit dem Montagegestell 2 verbindbare Vorwand 10. Die Vorwand 10 ist in den Figuren 1 und 2 nicht gezeigt.

Das Montagegestell 2 ist mit einer Tragstruktur, wie beispielsweise mit einem Gebäudeboden und/oder mit einer Gebäudewand, fest verbindbar. In der gezeigten Ausführungsform umfasst das Montagegestell 2 zwei beanstandet zueinander liegende Vertikalstützen 24. Die Montagetraverse 3 steht dabei fest mit den beiden Vertikalstützen 24 in Verbindung. Die Vertikalstützen 24 sind fest mit der Tragstruktur verbindbar. Die Vertikalstützen 24 erstrecken sich in Einbaulage in Richtung der Vertikalen. Die Montagetraverse 3 wird in der gezeigten Ausführungsform mit Schrauben zu den Vertikalstützen befestigt. Die Montagetraverse 3 kann beispielsweise aus Holz, Kunststoff oder Metall sein. In der gezeigten Ausführungsform ist das Gehäuse 4 mit Schrauben an der Montagetraverse 3 befestigt.

Das Gehäuse 4 weist eine Seitenwand 5, die einen Gehäuseinnenraum 6 seitlich begrenzt, und eine Frontöffnung 7 auf. Über die Frontöffnung 7 wird Zugang zum Gehäuseinnenraum 6 geschaffen. Weiter weist das Gehäuse 4 in der gezeigten Ausführungsform einen Gehäuseboden 27 auf. Der Gehäuseboden 27 liegt gegenüber der Frontöffnung 7. Das Gehäuse 4 ist mit dem Gehäuseboden 27 mit der Montagetraverse 3 verbindbar. Die Seitenwände 5 stehen in der gezeigten Ausführungsform im Wesentlichen rechtwinklig vom Gehäuseboden 27 ab. Die Seitenwände 5 und der Gehäuseboden 27 definieren dabei einen Gehäuseinnenraum 6, der im Wesentlichen quaderförmig ausgebildet ist.

Das mindestens eine Kabelschachtelement 8 umfasst einem Kabelschacht 9. Der Kabelschacht 9 dient der Aufnahme von Kabeln und/oder von Wellrohren 28, in welchen Kabel geführt werden. Das Kabelschachtelement 8 ist separat zum Gehäuse 4 ausgebildet und kann mit dem Gehäuse 4 verbunden werden. Dabei ist das Kabelschachtelement 8 an einer Aussenfläche 10 der Seitenwand 5 am Gehäuse 4 angebracht bzw. anordbar. Das Kabelschachtelement 8 erstreckt sich von der Aussenfläche 10 der Seitenwand 5 von der Seitenwand 5 weg.

In der gezeigten Ausführungsform sind zwei Kabelschachtelemente 8 angeordnet. Ein erstes Kabelschachtelement 8 ist an einer oberen Seitenwand 5 angeordnet und ein anderes Kabelschachtelement 8 ist an einer unteren Seitenwand 5 angeordnet. Die beiden Seitenwände liegen dabei bezüglich des Gehäuseinnenraums 6 einander diametral gegenüber.

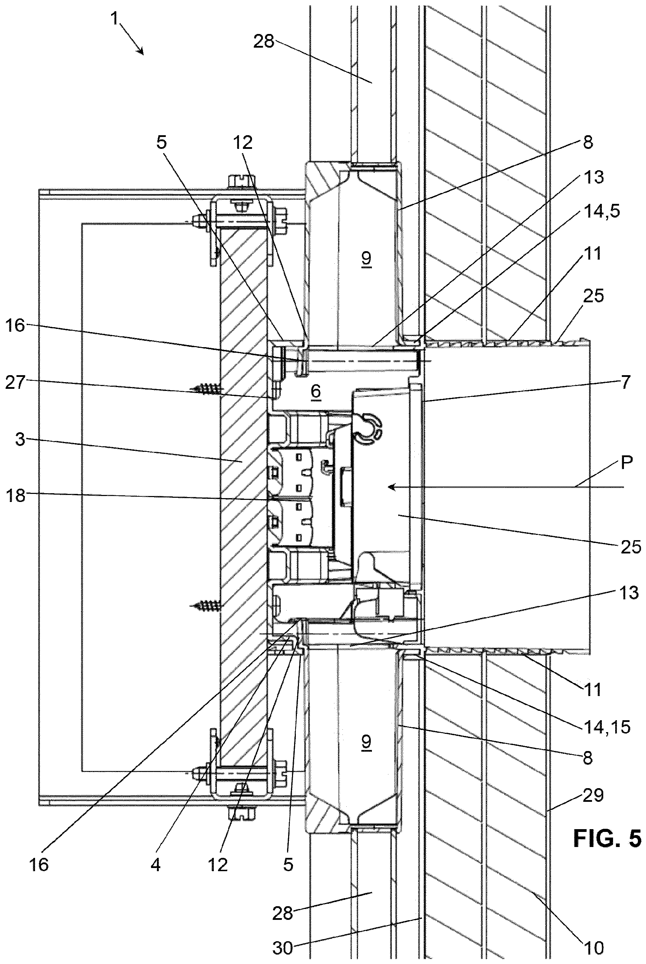

In der Figur 5 wird eine Schnittdarstellung der sanitären Einbauanordnung 1 gezeigt. Die Verbindung zwischen dem Kabelschachtelement 8 und der Seitenwand 5 ist von der Schnittdarstellung gut ersichtlich. Für die Verbindung zwischen dem Kabelschachtelement 8 und der Seitenwand 5 ist eine Befestigungsschnittstelle 12 vorgesehen. Über die Befestigungsschnittstelle 12 ist das mindestens eine Kabelschachtelement 8 mit der Seitenwand 5 verbindbar. Im Bereich der Befestigungsschnittstelle 12 weist die Seitenwand einen Durchbruch 13 auf, über welchen Kabel von Kabelschacht 9 in den Gehäuseinnenraum 6 geführt werden können. Die Befestigungsschnittstelle 12 wird durch eine Aufnahmenut 14 an der Seitenwand 5 und durch eine in die Aufnahmenut 14 eingreifende Haltelasche 15, die am Kabelschachtelement 8 angefordert ist, sowie durch eine am Kabelschachtelement 8 angeformte Rasterlasche 16, die am Durchbruch 13 eingreift, bereitgestellt. Bei der Montage wird die Haltelasche 15 in die Aufnahmenut 14 eingeführt und dann wird die Rastlasche 16 am Durchbruch 13 verrastet.

Das Kabelschachtelement 8 weist mindestens eine Aufnahmeöffnung 17 auf, durch welche ein Wellrohr und/oder ein Kabel in den Kabelschacht 9 führbar ist.

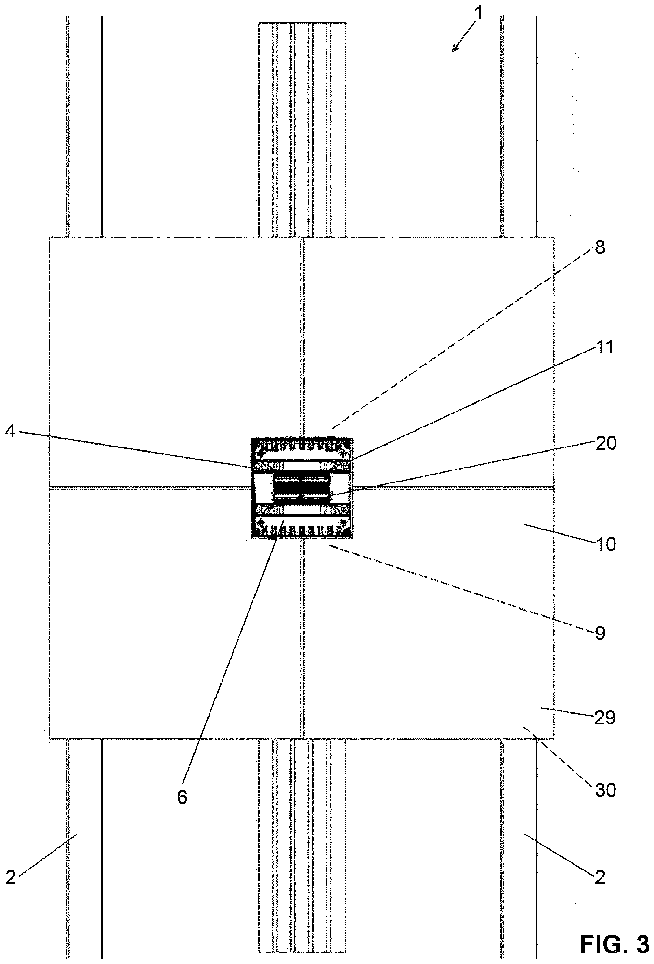

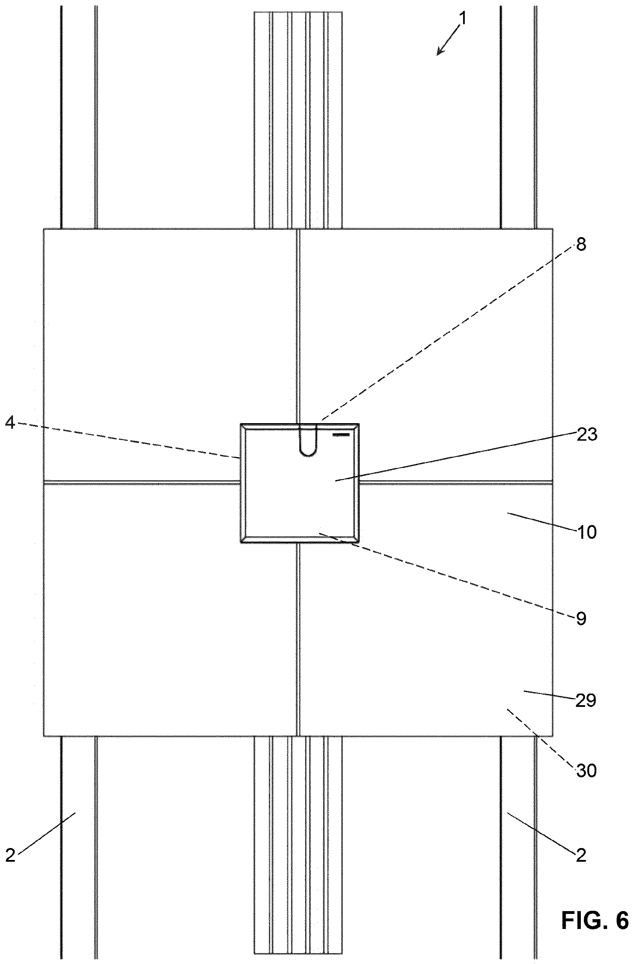

In den Figuren 3 bis 6 wird die Einbauanordnung mit der Vorwand 10 gezeigt. Die Vorwand 10 ist mit dem Montagegestell 2 verbindbar. Die Vorwand 10 weist einen Ausschnitt 11 auf. Der Ausschnitt 11 erstreckt sich dabei von einer Frontseite 29 der Vorwand 10 zu einer Rückseite 30 der Vorwand 10 durch die Vorwand 10 hindurch. Es handelt sich beim Ausschnitt 11 demnach um einen Durchbruch durch die Vorwand.

Bezüglich der Frontöffnung 7 ist der Ausschnitt 11 derart angeordnet, dass Zugang zur Frontöffnung 7 geschaffen wird. Über den Ausschnitt 11 können die Elemente, welche im Gehäuseinnenraum 6 zu platzieren sind, in den Gehäuseinnenraum 6 eingesetzt werden.

Ferner ist der Ausschnitt 11 bezüglich des mindestens einen Kabelschachtelements 8 derart angeordnet, dass das mindestens eine Kabelschachtelement 8 ausserhalb des Ausschnitts 11 liegt und dadurch durch die Vorwand 10 verdeckt ist. Mit anderen Worten gesagt ist bei montiertem Vorwand 10 vom Gehäuse 4 lediglich die Frontöffnung 7 und der Gehäuseinnenraum 6 sichtbar. Die anderen Elemente sind durch die Vorwand 10 verdeckt.

Der Ausschnitt 11 ist dabei derart angeordnet, dass ausschliesslich der Gehäuseinnenraum 6 zugänglich ist. Das Montagegestell 2, die Montagetraverse 3 sowie das mindestens eine Kabelschachtelement 8 sind durch die Vorwand 10 überdeckt.

Die lichte Weite des Ausschnitts 11 entspricht im Wesentlichen der lichten Weite der Frontöffnung 7.

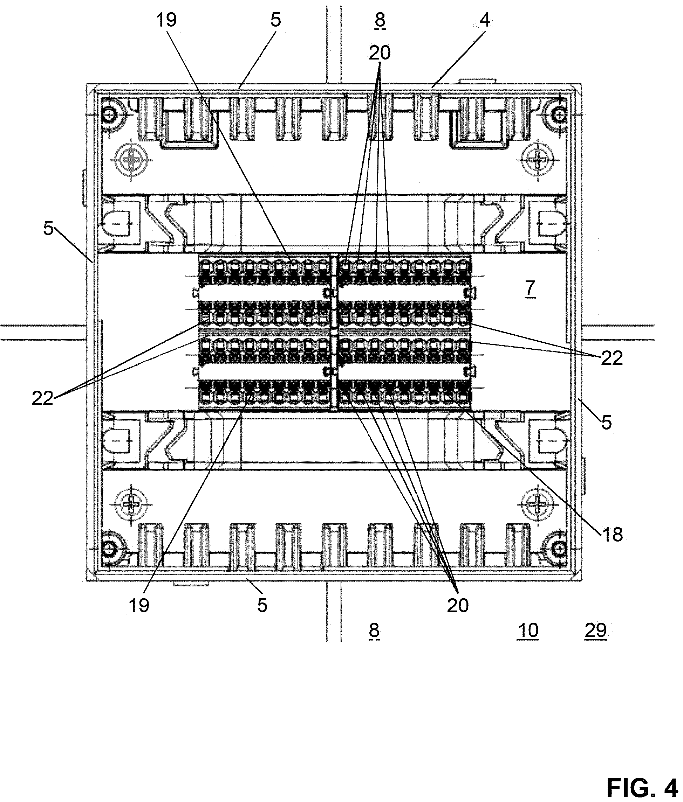

Im Gehäuseinnenraum 6 ist in der gezeigten Ausführungsform ein elektrisches Schnittstellenelement 18 angeordnet. Das elektrische Schnittstellenelement 18 wird in der Figur 4 schematisch gezeigt. Das Schnittstellenelement 18 umfasst einen Kabelklemmbereich 19 mit mindestens einer Kabelklemme 20. Vorzugsweise werden mehrere Blöcke mit mehreren Kabelklemmen 20 eingesetzt. Beispielsweise können pro Block jeweils vier Kabelklemmen 20 angeordnet werden. Ferner umfasst das Schnittstellenelement 18 einen Steckerbereich 21 mit mindestens einem schnittstellenelementseitigen Steckverbinder 22. Die mindestens eine Kabelklemme 20 steht mit dem mindestens einen schnittstellenelementseitigen Steckverbinder 22 elektrisch leitend Verbindung. Über diese elektrisch leitende Verbindung kann ein elektrischer Kontakt zwischen der Kabelklemme 20 und den Steckverbinder 22 hergestellt werden. Hierüber sind Datensignale wie auch elektrische Energie übertragbar. An der mindestens einen Kabelklemme 20 sind die Kabel, welche durch das Kabelschachtelement 8 in den Gehäuseinnenraum 6 geführt werden am elektrischen Schnittstellenelement 18 anschliessbar. Die Kabel können zu einem Sanitärartikel, der am Montagegestell gelagert ist, und/oder zu einem übergeordneten Leitsystem und/oder zu anderen in einem Sanitärraum angeordneten Sanitärelementen oder Sensoren, geführt werden.

Weiter umfasst die sanitäre Einbauanordnung 1 in der gezeigten Ausführungsform ein Steuerungsgerät 26, welches im Gehäuseinnenraum 6 angeordnet werden kann. Das Steuerungsgerät 26 umfasst mindestens einen steuerungsgerätseitigen Steckverbinder. Der steuerungsgerätseitigen Steckverbinder ist mit dem schnittstellenelementseitigen Steckverbinder 22 über eine Steckbewegung verbindbar. Die Steckbewegung ist mit dem Pfeil P in der Figur 5 eingezeichnet.

Das Steuerungsgerät 26 dient der Ansteuerung eines Sanitärartikels, der am Montagegestell gelagert ist. Vorzugsweise kann das Steuerungsgerät mit einem übergeordneten Leitsystem kommunizieren.

Die Steckbewegung ist vorzugsweise eine Längsbewegung, entlang welcher das Steuerungsgerät 26 geführt wird. Die Längsbewegung ist dabei rechtwinklig zur Frontseite 29. Das heisst, dass das Steuerungsgerät 26 entlang der Längsbewegung durch den Ausschnitt 11 in den Gehäuseinnenraum 6 einsetzbar ist und während der Steckbewegung direkt mit dem Schnittstellenelement 18 verbunden werden kann.

In der gezeigten Ausführungsform umfasst die Einbauanordnung weiterhin einen Deckel 23, mit welchem der Ausschnitt 11 verschliessbar ist.

In der gezeigten Ausführungsform umfasst die Einbauanordnung 1 weiterhin ein Rahmenelement 25, welches auf die Seitenwände 5 des Gehäuses 4 absetzbar ist. Das Raumelement 25 weist eine Rahmenöffnung 26 auf. Die lichte Weite der Rahmenöffnung 26 entspricht im Wesentlichen der lichten Weite des Gehäuseinnenraum 6 bzw. des Ausschnitts 11. Das Rahmenelement 25 kann nach der Montage entfernt werden oder auf die Ebene der Frontfläche 29 der Vorwand gekürzt werden.

### BEZUGSZEICHENLISTE

- 1: sanitäre Einbauanordnung
- 2: Montagegestell
- 3: Montagetraverse
- 4: Gehäuse
- 5: Seitenwand
- 6: Gehäuseinnenraum
- 7: Frontöffnung
- 8: Kabelschachtelement
- 9: Kabelschacht
- 10: Vorwand
- 11: Ausschnitt
- 12: Befestigungsschnittstelle
- 13: Durchbruch
- 14: Aufnahmenut
- 15: Haltelasche
- 16: Rastlasche
- 17: Aufnahmeöffnung
- 18: elektrisches Schnittstellenelement
- 19: Kabelklemmbereich
- 20: Kabelklemme
- 21: Steckerbereich
- 22: schnittstellenelementseitiger Steckverbinder
- 23: Deckel
- 24: Vertikalstützen
- 25: Rahmenelement
- 26: Steuerungsgerät
- 27: Gehäuseboden
- 28: Wellrohr
- 29: Frontseite
- 30: Rückseite

## Patentansprüche

1. Sanitäre Einbauanordnung (1) umfassend
ein mit einer Tragstruktur verbindbares Montagegestell (2),
eine mit dem Montagegestell (2) in Verbindung stehende Montagetraverse (3),
ein an der Montagetraverse (3) befestigtes Gehäuse (4) mit einer Seitenwand (5), die einen Gehäuseinnenraum (6) seitlich begrenzt, und mit einer Frontöffnung (7), über welche Zugang zum Gehäuseinnenraum (6) geschaffen werden kann,
mindestens ein mit dem Gehäuse (4) in Verbindung stehendes Kabelschachtelement (8) mit einem Kabelschacht (9), welches Kabelschachtelement (8) an einer Aussenfläche (10) der Seitenwand (5) am Gehäuse (4) angebracht ist und sich von einer Aussenfläche (10) der Seitenwand (5) von der Seitenwand (5) weg erstreckt,
und
eine mit dem Montaggestell (2) verbindbare Vorwand (10) mit einem Ausschnitt (11), wobei der Ausschnitt (11) derart angeordnet ist, dass Zugang zur Frontöffnung (7) geschaffen wird und dass das mindestens eine Kabelschachtelement (8) ausserhalb des Ausschnittes (11) liegt und durch die Vorwand (10) verdeckt liegt.

2. Sanitäre Einbauanordnung (1) nach Anspruch 1, **dadurch gekennzeichnet, dass** der Ausschnitt (11) derart angeordnet ist, dass ausschliesslich der Gehäuseinnenraum (6) zugänglich ist und dass das Montagegestell (2), die Montagetraverse (3) sowie das mindestens eine Kabelschachtelement (8) durch die Vorwand (10) überdeckt sind.

3. Sanitäre Einbauanordnung (1) nach Anspruch 1 oder 2, **dadurch gekennzeichnet, dass** die lichte Weite des Ausschnitts (11) der lichten Weite der Frontöffnung (7) entspricht.

4. Sanitäre Einbauanordnung (1) nach einem der vorhergehenden Ansprüche, **dadurch gekennzeichnet, dass** zwei der besagten Kabelschachtelemente (8) an zwei unterschiedlichen Seitenwänden (5) angeordnet sind, wobei die Seitenwände (5), an denen ein Kabelschachtelement (8) angeordnet ist, bezüglich des Gehäuseinnenraums (6) vorzugsweise diametral gegenüberliegen.

5. Sanitäre Einbauanordnung (1) nach einem der vorhergehenden Ansprüche, **dadurch gekennzeichnet, dass** das mindestens eine Kabelschachtelement (8) über eine Befestigungsschnittstelle (12) mit der Seitenwand (5) verbindbar ist, wobei die Seitenwand (5) einen Durchbruch (13) aufweist, über welchen Kabel vom Kabelschacht (9) in den Gehäuseinnenraum (6) führbar sind.

6. Sanitäre Einbauanordnung (1) nach Anspruch 5, **dadurch gekennzeichnet, dass** die Befestigungsschnittstelle (12) durch eine Aufnahmenut (14) an der Seitenwand (5) und durch eine in die Aufnahmenut (14) eingreifende Haltelasche (15), die am Kabelschachtelement (8) angeformt ist und durch eine am Kabelschachtelement (8) angeformte Rastlasche (16), die am Durchbruch (13) eingreift, bereitgestellt wird.

7. Sanitäre Einbauanordnung (1) nach einem der vorhergehenden Ansprüche, **dadurch gekennzeichnet, dass** das Kabelschachtelement (8) mindestens eine Aufnahmeöffnung (17) aufweist, durch welche ein Wellrohr (28) mit einem Kabel oder ein Kabel in den Kabelschacht (9) des Kabelschachtelements (8) führbar ist.

8. Sanitäre Einbauanordnung (1) nach einem der vorhergehenden Ansprüche, **dadurch gekennzeichnet, dass** das Gehäuse (4) einen Gehäuseboden (27) aufweist, welcher gegenüber der Frontöffnung (7) angeordnet ist, wobei vorzugsweise das Gehäuse (4) mit dem Gehäuseboden (27) auf der Montagetraverse (3) aufliegt.

9. Sanitäre Einbauanordnung (1) nach einem der vorhergehenden Ansprüche, **dadurch gekennzeichnet, dass** im Gehäuseinnenraum (6) ein elektrisches Schnittstellenelement (18) mit einem Kabelklemmbereich (19) mit mindestens einer Kabelklemme (20) und einen Steckerbereich (21) mit mindestens einem schnittstellenelementseitigen Steckverbinder (22) angeordnet ist, wobei die mindestens eine Kabelklemme (20) mit dem mindestens einen schnittstellenelementseitigen Steckverbinder (22) elektrisch leitend in Verbindung steht.

10. Sanitäre Einbauanordnung (1) nach Anspruch 9, **dadurch gekennzeichnet, dass** Kabel, welche durch den Kabelschacht (9) in den Gehäuseinnenraum (6) geführt werden, mit der mindestens einen Kabelklemme (20) verbindbar sind.

11. Sanitäre Einbauanordnung (1) nach Anspruch 9 oder 10, **dadurch gekennzeichnet, dass** weiterhin umfassend ein Steuerungsgerät (26), wobei der mindestens eine schnittstellenelementseitige Steckverbinder (22) zur Aufnahme eines steuerungsgerätseitigen Steckverbinders des Steuerungsgerätes (26) ausgebildet ist, wobei der schnittstellenelementseitigen Steckverbinder (22) mit dem steuerungsgerätseitigen Steckverbinder über eine Steckbewegung verbindbar sind.

12. Sanitäre Einbauanordnung (1) nach Anspruch 11, **dadurch gekennzeichnet, dass** die Steckbewegung eine Längsbewegung ist, welche rechtwinklig zur Frontseite (29) der Vorwand (10) orientiert ist.

13. Sanitäre Einbauanordnung (1) nach einem der vorhergehenden Ansprüche, **dadurch gekennzeichnet, dass** die Einbauanordnung (1) weiterhin einen Deckel (23) umfasst, mit welchem der Ausschnitt (11) verschliessbar ist.

14. Sanitäre Einbauanordnung (1) nach einem der vorhergehenden Ansprüche, **dadurch gekennzeichnet, dass** das Montagegestell (2) zwei beabstandet zueinander liegende Vertikalstützen (24) umfasst, wobei die Montagetraverse (3) sich von der einen Vertikalstütze (24) zur anderen Vertikalstütze (24) erstreckt.

15. Sanitäre Einbauanordnung (1) nach einem der vorhergehenden Ansprüche, **dadurch gekennzeichnet, dass** die Einbauanordnung (1) weiterhin ein Rahmenelement (25) umfasst, welches auf die Seitenwände (5) des Gehäuses (4) aufsetzbar ist, wobei das Rahmenelement (25) eine Rahmenöffnung (26) aufweist, dessen lichte Weite der lichten Weite des Gehäuseinnenraums (6) entspricht.
